# FASCICULE DE BREVET EUROPEEN

(11) **EP 1 467 145 B1**
(45) Date de publication et mention de la délivrance du brevet: **25.01.2006**
(21) Numéro de dépôt: 03290862.6
(22) Date de dépôt: 07.04.2003
(51) Int. Cl.: F21V 9/08

(54) **Feu de signalisation de véhicule automobile**
Signalleuchte für Fahrzeuge
Signal light for motor vehicles

(43) Date de publication de la demande: 13.10.2004
(73) Titulaire: AUTOMOTIVE LIGHTING REAR LAMPS FRANCE, 89330 Saint-Julien-Du-Sault (FR)
(72) Inventeur: Buisson, Alain, 78320 Le Mesnil Saint-Denis (FR)
(74) Mandataire: Faber, Jean-Paul

(56) Documents cités:
- DE-A- 1 655 682
- DE-A- 2 062 472
- FR-A- 2 530 781

## Description

La présente invention se rapporte à un feu de signalisation de véhicule automobile.

La présente invention vise un feu de signalisation qui, tout en répondant aux impératifs de la réglementation, soit zone ambre pour les indicateurs de changement de direction, zone rouge pour le feu arrière et zone cristal pour le feu de recul présente, vu de l'extérieur, un aspect et une couleur uniformes.

La demande de brevet français n° 02.09824 déposée le 1^{er} Août 2002 appartenant à la Demanderesse vise un tel feu qui comprend un réflecteur avec une lampe et une glace, entre la glace et la lampe un écran optique et entre l'écran optique et la glace un écran intermédiaire présentant, sur sa face tournée vers l'écran optique, une série de prismes, tandis que la face tournée en regard de la glace, au droit des prismes, comporte des logements remplis de matière colorée, des zones planes incolores circulaires étant ménagées entre les prismes.

Une tel feu est aussi connue du document DE 2 062 472 que propose une feu avec un écran muni de protubérances sur la face en regard de la source lumineuse et entre lesquelles est disposée une matière colorée.

Une telle réalisation permet d'obtenir les différentes fonctions par addition de couleurs, par exemple feu de recul, clignotant de changement de direction etc.. avec le catadioptre. Toutefois, cette réalisation s'avère onéreuse puisqu'on doit prévoir un écran optique, un écran intermédiaire et une glace fermant le feu.

L'un des buts de la présente invention est de simplifier un tel feu.

Le feu de signalisation, selon l'invention, est du type comprenant un réflecteur avec une lampe, un écran optique disposé devant la lampe et un deuxième écran disposé devant l'écran optique et comportant, sur sa face tournée en regard de l'écran optique, des prismes séparés par des plages méplates, la face du deuxième écran, opposée à celle tournée en regard de l'écran optique, présentant, au droit des prismes, des logements remplis d'une matière transparente colorée, ledit feu étant caractérisé en ce que ladite face du deuxième écran pourvue des logements présente, entre les logements, au droit des plages méplates, des protubérances circulaires, cette dite face étant revêtue d'une mince couche de la matière transparente colorée remplissant les logements et les espaces ménagés entre les protubérances.

Grâce à une telle disposition, on peut supprimer la glace fermant le feu, le deuxième écran pouvant constituer celle-ci.

De préférence, le deuxième écran est incolore et la matière transparente colorée est rouge.

Les logements peuvent affecter la forme des bases des prismes.

Enfin, l'écran optique est coloré afin que par addition de couleurs avec le deuxième écran, on puisse obtenir les différentes fonction du feu.

L'invention va maintenant être décrite avec plus de détails en se référant à un mode de réalisation particulier donné à titre d'exemple seulement et représenté aux dessins annexés.

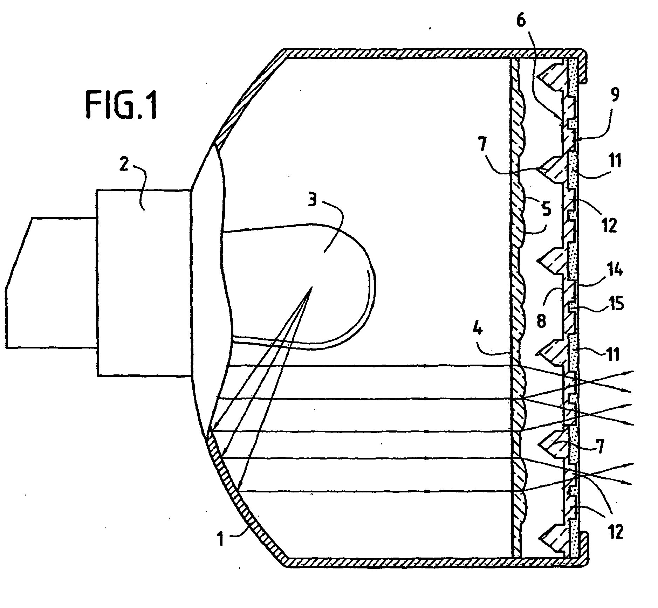

Figure 1 est une vue en coupe d'un feu, selon l'invention.

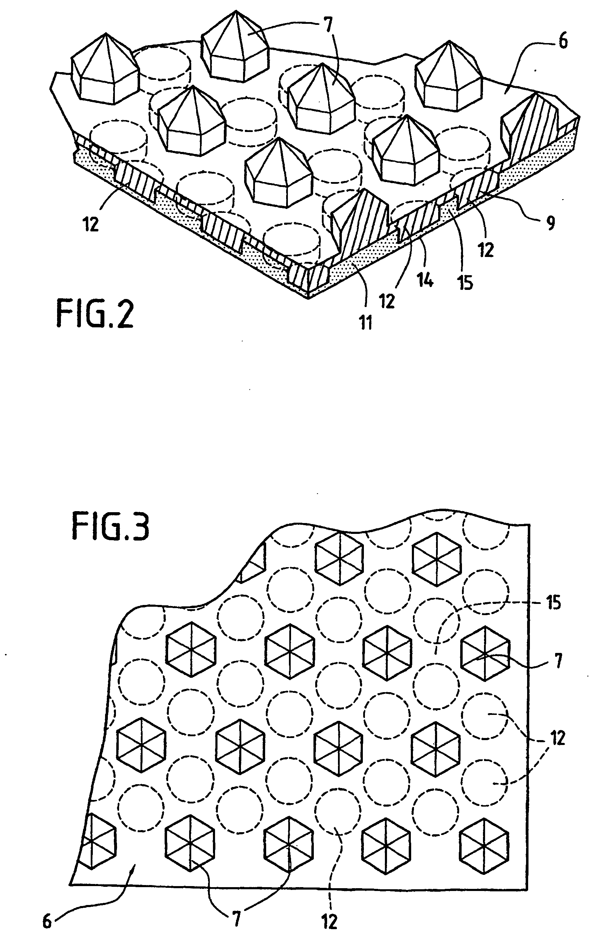

Figure 2 montre en perspective un détail de l'écran.
Figure 3 est une vue en plan montrant la face du deuxième écran tournée vers l'écran optique.

Le feu représenté aux figures comprend un réflecteur 1 et une douille 2 supportant une lampe 3.

Le réflecteur 1 supporte un écran optique 4 présentant, sur sa face tournée du côté opposé à la lampe 3, des lentilles sphériques ou toriques 5.

Le réflecteur 1 est fermé par un deuxième écran 6 présentant, du côté de l'écran optique 4, une série de prismes 7. Ces prismes sont formés par des polyèdres présentant, chacun, une base hexagonale avec des parois latérales rectangulaires terminées par des pyramides.

Les prismes 7 sont séparés par des zones planes 8.

Le face 9 de l'écran 6, du côté opposé à l'écran optique 4, présente, au droit des prismes, des logements 11 et, au droit des zones planes 8, des protubérances circulaires 12 ménageant entre elles des espaces 15.

Les logements 11 ont la même forme que la base des prismes 7 et sont légèrement plus grands que celle-ci.

Les logements 11 et les espaces 15 situés entre les protubérances 12 sont remplis d'une matière transparente colorée rouge 14, une épaisseur de cette même matière étant disposée sur la face 9.

L'écran 6 est incolore et forme avec la couche 14 la glace du feu.

Vu de l'extérieur, le feu présente un aspect rouge uniforme.

L'écran optique 4 permet de canaliser les rayons lumineux émis par la lampe 3 dans les zones situées entre les prismes au droit des protubérances 12.

Les prismes 7 forment le catadioptre et permettent de renvoyer la lumière venant de l'extérieur pour la renvoyer colorée en rouge.

L'écran optique 4 peut être coloré de manière que, par addition de couleurs avec l'écran 6, on puisse obtenir les couleurs correspondant aux différentes fonctions par exemple, l'écran optique 4 peut être bleu pour le feu de recul ou vert pour le changement de direction.

Bien entendu, l'invention n'est pas limitée au mode de réalisation qui vient d'être décrit et représenté. On pourra y apporter de nombreuses modifications de détail sans sortir pour cela du cadre de l'invention.

## Revendications

1. Feu de signalisation du type comprenant un réflecteur (1) avec une lampe (3), un écran optique (4) disposé devant la lampe et un deuxième écran (6) situé devant l'écran optique et comportant, sur sa face tournée en regard de l'écran optique, des prismes (7) séparés par des plages méplates (8), la face (9) du deuxième écran (6) opposée à celle tournée en regard de l'écran optique (4) présentant, au droit des prismes, des logements (11) remplis d'une matière transparente colorée, ledit feu étant **caractérisé en ce que** ladite face (9) du deuxième écran (6), pourvue des logements, présente entre les logements (11), au droit des plages méplates, des protubérances circulaires (12), cette dite face (9) étant revêtue d'une mince couche (14) de la matière transparente colorée remplissant les logements (11) et les espaces (15) ménagés entre les protubérances (12).

2. Feu de signalisation, selon la revendication 1, **caractérisé en ce que** le deuxième écran est incolore et la matière transparente colorée est rouge.

3. Feu de signalisation, selon la revendication 1, **caractérisé en ce que** les logements (11) affectent la forme de la base des prismes.

4. Feu de signalisation, selon la revendication 1, **caractérisé en ce que** l'écran optique (4) est coloré afin que, par addition de couleurs avec le deuxième écran (6), on puisse obtenir les différentes fonctions du feu.

## Patentansprüche

1. Signalleuchte der Art, die einen Reflektor (1) mit einem Leuchtmittel (3), eine optische Scheibe (4), die vor dem Leuchtmittel angeordnet ist, und eine zweite Scheibe (6)umfasst, die vor der optischen Scheibe liegt und auf ihrer Seite, welche der optischen Scheibe zugewandt ist, Prismen (7) aufweist, die durch abgeflachte Bereiche (8) getrennt sind, wobei die Seite (9) der zweiten Scheibe (6), welche derjenigen gegenüberliegt, welche der optischen Scheibe (4) zugewandt ist, in Ausrichtung auf die Prismen Ausnehmungen (11) aufweist, die mit farbigem, durchsichtigem Material gefüllt sind, wobei die Leuchte **dadurch gekennzeichnet ist, dass** die Seite (9) der zweiten Scheibe (6), die mit den Ausnehmungen versehen ist, zwischen den Ausnehmungen (11), ausgerichtet auf die abgeflachten Bereiche, kreisrunde Vorsprünge (12) aufweist, wobei diese Seite (9) mit einer dünnen Schicht (14) aus dem farbigen, durchsichtigen Material überzogen ist, welches die Ausnehmungen (11) und die zwischen den Vorsprüngen (12) befindlichen Räume (15) ausfüllt.

2. Signalleuchte nach Anspruch 1, **dadurch gekennzeichnet, dass** die zweite Scheibe farblos ist und das farbige, durchsichtige Material rot ist.

3. Signalleuchte nach Anspruch 1, **dadurch gekennzeichnet, dass** die Ausnehmungen (11) die Form der Prismengrundfläche haben.

4. Signalleuchte nach Anspruch 1, **dadurch gekennzeichnet, dass** die optische Scheibe (4) farbig ist, damit, durch Hinzufügen von Farben mit der zweiten Scheibe (6), die verschiedenen Funktionen der Leuchte erzielt werden können.

## Claims

1. Signal light of the type comprising a reflector (1) with a lamp (3), an optical screen (4) arranged in front of the lamp and a second screen (6) that is arranged in front of the optical screen and comprises prisms (7) on its side facing the optical screen which are separated by flat zones (8), the side (9) of the second screen (6) opposite the one facing the optical screen (4) having housings (11) opposite the prisms that are filled with a coloured transparent material, the said light being **characterised in that** the said side (9) of the second screen (6) provided with housings has circular protrusions (12) between the housings (11) and opposite the flat zones, said side (9) being covered with a thin layer (14) of transparent coloured material filling the housings (11) and the spaces (15) between the protrusions (12).

2. Signal light according to claim 1, **characterised in that** the second screen is colourless and the transparent coloured material is red.

3. Signal light according to claim 1, **characterised in that** the housings (11) influence the shape of the base of the prisms.

4. Signal light according to claim 1, **characterised in that** the optical screen (4) is coloured so that with the addition of colours with the second screen (6) it is possible to obtain the different functions of the light.
